(19)

Europäisches
Patentamt
European
Patent Office
Office européen
des brevets

(11) **EP 4 588 625 A1**

(12) **EUROPEAN PATENT APPLICATION**

(43) Date of publication:
**23.07.2025 Bulletin 2025/30**

(21) Application number: **24305118.2**

(22) Date of filing: **19.01.2024**

(51) International Patent Classification (IPC):
**B25J 9/16** (2006.01)

(52) Cooperative Patent Classification (CPC):
**B25J 9/1664; B25J 9/163;** G05B 2219/33056;
G05B 2219/40499

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TOYOTA JIDOSHA KABUSHIKI
KAISHA**
**Toyota-shi, Aichi-ken, 471-8571 (JP)**

(72) Inventors:
• **DESPINOY, Fabien**
  **1140 Brussels (BE)**
• **VAN LOOCK, Mark**
  **1140 Brussels (BE)**

• **MEIER, Sven**
  **1140 Brussels (BE)**
• **HONERKAMP, Daniel**
  **79110 Freiburg im Breisgau (DE)**
• **WELSCHEHOLD, Tim**
  **79110 Freiburg im Breisgau (DE)**
• **VALADA, Abhinav**
  **79110 Freiburg im Breisgau (DE)**

(74) Representative: **Cabinet Beau de Loménie**
**103, rue de Grenelle**
**75340 Paris Cedex 07 (FR)**

Remarks:
Amended claims in accordance with Rule 137(2)
EPC.

(54) **METHODS FOR ROBOTIC MANIPULATION TASKS**

(57) A computer-implemented method for training a robot control model to perform manipulation tasks comprising: (S10) determining a theoretical end-effector path between a current pose of an end-effector of a robot and a final pose representative of completion of a manipulation task; (S20) generating an effective end-effector path by using an end-effector control model considering the theoretical end-effector path as a target while satisfying dynamic constraints; (S30) calculating end-effector commands and base commands for moving the end-effector according to the effective end-effector path; and (S40) updating the state of the robot by implementing motion of the robot within the environment; (S50) updating the end-effector control model through reinforcement learning using on a reward takin into account interaction between the robot and the environment.

S10 — Determining a theoretical end-effector path between a current pose representative of a current state of the robot and a final pose representative of the completion of an input object manipulation task

S20 — Generating an effective end-effector path by using a machine learning-based end-effector control model considering the theoretical end-effector path as a target while satisfying dynamic constraints caused by an environment of the robot

S30 — Calculating end-effector commands and base commands for moving the end-effector according to the effective end-effector path

S40 — Updating the state of the robot by implementing motion of the end-effector and the base of the robot within the environment

S50 — Updating the end-effector control model using reinforcement learning based on a reward taking into account interaction between the environment of the robot and the updated state of the robot

**FIG.1**

EP 4 588 625 A1

**Description**

BACKGROUND OF THE INVENTION

1. Field of the Invention

The invention relates to the field of robotics, notably service robotics monitoring robotics. In particular, the invention relates to a method for training a control model of a robot to perform manipulation tasks.

2. Description of Related Art

Mobile manipulation of objects, especially articulated objects such as doors, drawer and cabinets is an important task in robotics. Further, one or more manipulations of objects may be necessary in order to perform a more complex task. Typically, robotic manipulators (referred to as robots in the present description) interact with objects by a combination of motions of a base, which moves the robot in its environment, and of an end-effector, such as an arm, that manipulates the object.

In order to control the motions of the robot with the view of completing a task, some methods of the prior art rely on a known end-effector planner, which parametrizes the end-effector motion based on the nature of the object, and on a reinforcement learning-based model which controls the motion of the base in order to make the end-effector motion feasible (see [REF 1] & [REF 2]).

However, such methods require that end-effector planners are available for the object to be manipulated. While they can stem from different systems, such as heuristics, planners or imitation learning, end-effector motions cannot be generalized to unseen objects and/or to objects manipulated in complex tasks. In particular, manipulating and opening unseen articulated objects generally requires human input to define suitable end-effector motions. There is thus a need for methods solving problems of the prior art.

The following references disclose various methods relating to object manipulation using end-effector planner and reinforcement learning-based base motion control.

[REF 1] HONERKAMP, Daniel, WELSCHEHOLD, Tim, et VALADA, Abhinav. N2M2: Learning Navigation for Arbitrary Mobile Manipulation Motions in Unseen and Dynamic Environments. IEEE Transactions on Robotics, 2023.
[REF 2] HONERKAMP, Daniel, WELSCHEHOLD, Tim, et VALADA, Abhinav. Learning kinematic feasibility for mobile manipulation through deep reinforcement learning. IEEE Robotics and Automation Letters, 2021, vol. 6, no 4, p. 6289-6296.
[REF 3] SCHMALSTIEG, Fabian, HONERKAMP, Daniel, WELSCHEHOLD, Tim, et al. Learning Hierarchical Interactive Multi-Object Search for Mobile Manipulation. IEEE Robotics and Automation Letters, 2023.

SUMMARY OF THE INVENTION

According to aspects of the present disclosure, a computer-implemented method for training a robot control model to perform (object) manipulation tasks is provided. The method comprises steps of:

- determining a theoretical end-effector path between a current pose of an end-effector of a robot representative of a current state of the robot and a final pose representative of the completion of a manipulation task;
- generating an effective end-effector path by using a machine learning-based end-effector control model considering the theoretical end-effector path as a target while satisfying dynamic constraints caused by an environment of the robot in relation to the current state of the robot;
- calculating end-effector commands and base commands for moving the base according to the effective end-effector path;
- updating the state of the robot by implementing motion of the end-effector and the base of the robot within the environment using the calculated end-effector commands and base commands; and
- updating the end-effector control model through reinforcement learning using a reward taking into account interaction between the environment of the robot and the updated state of the robot.

In the present description, the manipulation tasks may be any task involving interaction of the robot with respect to an object. In particular, the manipulation task may be any task related to grasping an object, moving around an object, finding an object, picking up and placing an object. Further, the manipulation tasks may comprise complex tasks such as opening a drawer, turning a handle, assembling pieces, cutting an object in two pieces, or similar.

In the present description, the state of the robot is the proprioceptive state of the robot, which comprises at least a part of the information characterizing the kinematic parameters of the robot at a current state. Such information may comprise, for example, the angles and distances between elements of the robots, such as the end-effector and the base. Such information may also comprise, for instance, kinematic data related to joints of the robot and/or a gripper angle of the end-effector.

In the present description, the target pose may be any pose related to the completion of a task. For example, the target pose may be: a pick up pose representative of a location where to pick up an object, a drop pose representative of a location where to pose an object, a grasp pose representative of a location where to interact with an element of an articulated object, an openness pose representative of the fact that an articulated object is in an open configuration.

In the present method, the theoretical end-effector path is an ideal path between the initial pose of the robot and the target pose. The theoretical end-effector path may be generated by considering an occlusion map of the environment representative of boundaries within the environment. In particular, the path generator may be a pathfinding algorithm such as the A* ("A-star") algorithm.

In the present description, the effective end-effector path may comprise a plurality of effective sub-goals, one of which being used as a target for the end-effector control model during one or more iterations of the training method until such effective sub-goal is reached, to be replaced by a new effective sub-goal of the effective end-effector path.

The present training method may be performed through computer-implemented simulations, wherein robot motions and interactions with the environment are generated artificially with a software (possibly based on captured images from real scenes), or through physical implementations, wherein a control model under training is uploaded in a mobile manipulation robot.

The steps of the method may be performed iteratively a plurality of times until the end-effector control model learns end-effector motions that are adapted to various manipulations tasks.

Advantageously, the present method allows for training a control model of a robot to interact with objects in an environment while avoiding obstacles. In particular, the present method allows the control model of the robot to learn how to open arbitrary unseen articulated objects and/or performing complex tasks such as picking up and placing an object, cleaning a white board, opening a door, or similarly, including tasks involving multiple interactions with objects. Further, the robot control model learns how to recover from failures such as missed grasping of an object or a slipping of an object from the end-effector.

With the present method, the end-effector model is conditioned on the trained base model so that the end-effector model learns to produce motions that are simple to follow for the base model while avoiding configurations and motions that would lead to large deviations. Further, the end-effector model learns the behavior of the base model in order to adapt to the base model and produce synergistic motions of the end-effector and the base.

This is in stark contrast with methods of the prior art, which require previous knowledge of the objects to be manipulated and an existing end-effector planner specific to the objects to be manipulated (or to the task to be performed) in order to successfully move the end-effector and perform the manipulation. In particular, such methods cannot be generalized to complex tasks whereas it is possible with the present method.

According to embodiments, the theoretical end-effector path comprises a plurality of (successive) theoretical sub-goals, and the end-effector control model is configured to generate an effective end-effector path that comprises at least one effective sub-goal that is reachable by the end-effector based on constraints of the robot and the environment. The physical constraints may comprise, in particular, the impossibility to cross boundaries of the environment, which can be parametrized by an occlusion map that is fed to the end-effector control model.

According to embodiments, the theoretical end-effector path is recalculated when the effective end-effector path is obstructed or if the target pose is changed to a new target pose.

According to embodiments, the step of calculating end-effector commands and base commands for moving the end-effector according to the effective end-effector path comprises:

- calculating velocity parameters of the end-effector required to achieve motion of the end-effector according to the end-effector path.

According to embodiments, the step of calculating end-effector commands and base commands for moving the base according to the effective end-effector path comprises:

- calculating velocity parameters of the base of the robot (such as velocity of the base and velocity of other elements of the robot) required to achieve motion of the end-effector according to the effective end-effector path, where the calculation comprises using a pre-trained base control model configured to control the base so that the end-effector motion is possible.

The pre-trained base control model may be trained with a reinforcement learning scheme, such as disclosed in [REF 1].

According to embodiments, the step of updating the state of the robot by implementing motion of the end-effector and the base of the robot using the calculated end-effector commands and base commands comprises:

- processing the base commands and the end-effector commands with an inverse kinematics solver to obtain commands corresponding to the updated state of the robot in a joint coordinate system.

According to embodiments, the state of the robot comprises a force feedback of the robot representative of forces acting on the end-effector.

According to embodiments, a target state of an object representative of the completion of the manipulation task is used as an input in the step of determining a theoretical end-effector path between a current pose of an end-effector of the robot representative of a current state of the robot and a target pose representative of completion of a manipulation task.

According to embodiments, the reward is a function of a progress of the end-effector towards an effective sub-goal. In that case, the effective sub-goal may be the next effective sub-goal to achieve which is generated by the end-effector control model.

The progress may be evaluated, for example, by a distance between Cartesian coordinates of the next effective sub-goal and the pose related to the current state of the robot. The progress may also be evaluated by taking into account the fact that a sub-goal is reached during an iteration.

In embodiments, the reward is a function of other parameters comprising: a feasibility parameter representative of a success for the base control model to perform a motion of the base and the end-effector, a success parameter related to the achievement of an effective sub-goal, and/or an task completion term characterizing a difference between the final state of the target object and a current state of an object perceived by the robot.

According to embodiments, the target state comprises a parameter representative of the fact that the object to manipulate is an articulated object. Further, according to embodiments, the target state comprises a parameter representative of the fact that an articulated object to manipulate is in an open configuration or in a closed configuration.

The present description further relates to a method for controlling a robot to perform a manipulation task comprising:

- training a control model of the robot to calculate motions of the robot configured to implement manipulation tasks using the above training method;
- controlling motion of a robot in order to perform a predetermined manipulation task using the trained control model.

With the present method, a robot equipped with the trained control model can perform complex tasks, such as tasks involving interaction with articulated objects. In particular, in order to perform a task, a robot equipped with the trained control model can manipulate in the arbitrary objects and/or objects that have not been seen during training while avoiding collision with the environment. The robot equipped with the trained control model may be a real robot interacting with a real environment, or a simulated robot interacting with a virtual simulation-based environment (possibly relying on captured real-world data).

Advantageously, such method can be applied to any robots without requiring any domain adaptation. In other terms, it is possible to directly transfer the knowledge acquired by the control model during training to the case of a robot control in any environment (real or virtual).

According to embodiments, the training is simulation-based and the control model of the robot is fixed (frozen) after training; the fixed control model being directly used for inference to control the robot in a new environment without domain adaptation.

With this method, the training is performed purely in simulation and experimental training can be avoided. This is particularly advantageous, as experimental training is generally time-consuming and expensive. Therefore, the robot control model can be directly deployed in an ensemble of robots without requiring additional tuning. This advantage leverages the fact that the training method does not need domain adaptation. The simulation-based training may be based on artificially generated data or on real-world data (for example captured images from real scenes).

The present description further relates to a mobile manipulation robot comprising:

- a base configured to allow motion of the robot within an environment;
- an end-effector configured to interact with objects in the environment of the robot; and
- a control unit configured to command a motion of the base and a motion of the end-effector in order to perform a predetermined manipulation task involving interaction with objects of the environment using the method according to the above method for controlling a robot.

The present disclosure is further related to a computer program including instructions for executing the steps of the above methods when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; and magneto-optical disks.

Alternatively, the recording medium can be an integrated circuit in which the program is incorporated, the circuit being adapted to execute the above methods or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram representing aspects of a method for training a robot control model according to embodiments of the present disclosure;
FIG. 2 is a diagram of a system for mobile robotic manipulation equipped with a robot control model according to embodiments of the present disclosure;
FIGS. 3 is a block diagram illustrating architecture of method for training a robot control model according to embodiments of the present disclosure.

DETAILED DESCRIPTION OF EMBODIMENTS

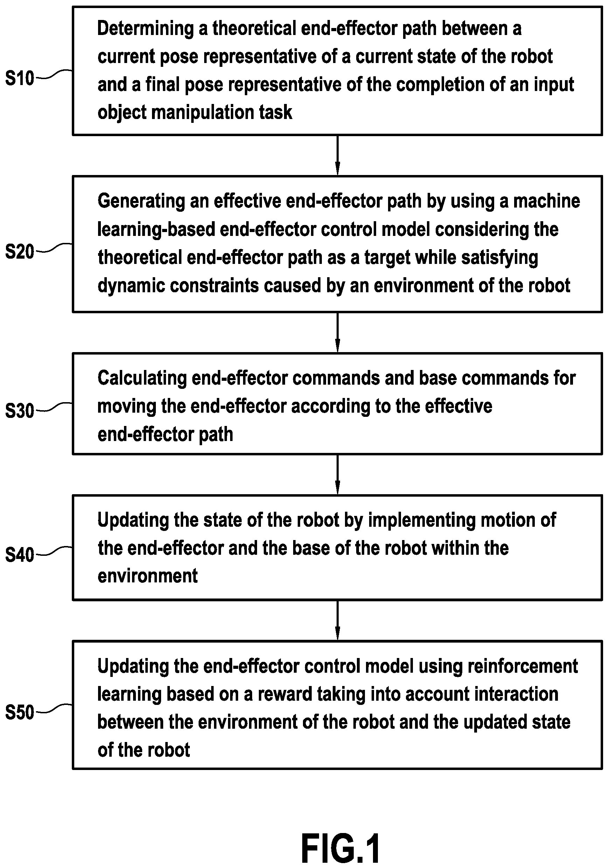

Methods and systems for robotic mobile manipulation, which constitute exemplary embodiments of the present disclosure, are now going to be presented in relation with FIGS.1-3.

FIG. 1 illustrates embodiments of a robotic mobile manipulation method according to the present disclosure. The method comprises the following steps: (S10) determining a theoretical end-effector path between a current pose of an end-effector of a robot representative of a current state of the robot and a final pose representative of the completion of an input object manipulation task; (S20) generating an effective end-effector path by using a machine learning-based end-effector control model considering the theoretical end-effector path as a target while satisfying dynamic constraints caused by an environment of the robot in relation to the current state of the robot; (S30) calculating end-effector commands and base commands for moving the end-effector according to the effective end-effector path; (S40) updating the state of the robot by implementing motion of the end-effector and the base of the robot within the environment using the calculated end-effector commands and base commands; and (S50) updating the end-effector control model through reinforcement learning based on a reward taking into account interaction between the environment of the robot and the updated state of the robot.

The present robotic mobile manipulation method may be used for training an end-effector control model to learn to generate end-effector motions which are adapted to various tasks. For example tasks that involve articulated objects requiring specific manipulation, such as a drawer or a door. The present method utilizes a base control model that is already trained, for example using reinforcement learning as disclosed in [REF 1].

Therefore, steps S10, S20, S30, S40, S50 of the method may be repeated a certain number of times so that the end-effector control model is updated a sufficient amount of time to learn optimal end-effector motions for various objects.

The present method may be offline or online.

The method may be offline in the sense that the training may be performed in simulation only and the robot later deployed in an environment (real or virtual) in order to manipulate objects using the trained control model. Further, the method may be online in that the training may be performed partially or totally in an environment (real or virtual) while the robot is used for performing a target task involving object manipulation.

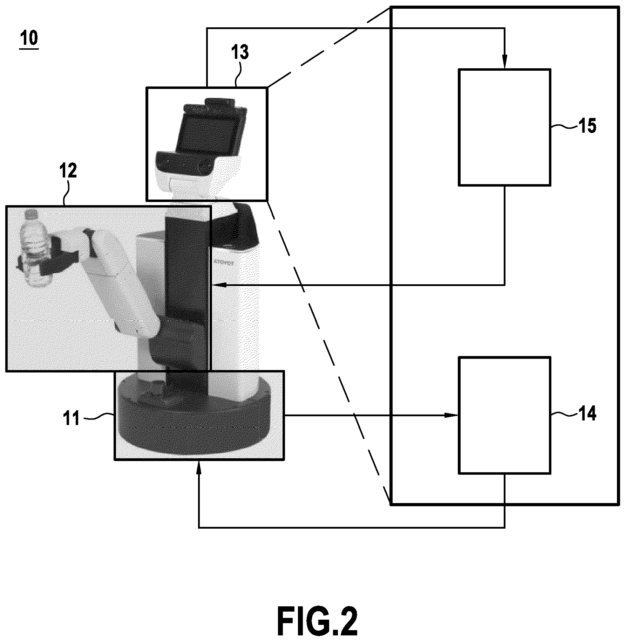

FIG. 2 illustrates an exemplary system implementing the robotic mobile manipulation methods according to the present disclosure, also referred to as robots. The exemplary robot comprises a base 11 configured to move the robot in an environment (for example an office); an end-effector 12 configured to interact with physical objects in the environment of the robot; and a control unit 13 configured to control the motion of the base 11 and the motion of the end-effector 12. The robots may be of a type similar to the human support robots (HSR) by Toyota® or the personal robots (PR) by Willow Garage®.

The illustration in Fig. 2 is purely illustrative and does not prejudge of the location of the control unit 13 within the robot. In particular, the control unit 13 may be located in the torso of the robot (or in any other elements of the robot) instead of the head of the robot without changing the way the present method is applied to the training of a control model of a robot and/or the application of the trained control model to the control of a robot.

The end-effector 12 is configured to move according to three dimensions with respect to the base 11. The end-effector can have many variants, for example it can be an arm with several arm elements, including a hand.

The control unit 13 comprises a base control model 14 controlling the motion of the base 11 and an end-effector control model 15 controlling the motion of the end-effector 12.

In particular, the end-effector model 15 generates commands for moving the end-effector 12 based on a pose of a target object to manipulate and on the current state of the end-effector 12. Further, the base control model 14 generates commands for moving the base 11 based on a pose of a target object, on the current state of the base 11, and on kinematics parameters retrieved from the end-effector control model 15. The base control model 14 is configured to move the base 11 in accordance with the motion of the end-effector 12 so that the combined motions of the base 11 and the end-effector 12 are kinematically possible.

In embodiments, the base control model 14 may be based on a machine learning model that is trained to account for the kinematic feasibility of the motion of the base 11 and the end-effector 12 based on the state of the robot (robot proprioception parameters, such as current position vectors and velocity vectors of the base and end-effector of the robot and the kinematic information obtained from the end-effector control model 15.

As an example, the base control model 14 may be trained using reinforcement learning, similarly to the method disclosed in [REF 1].

The proprioceptive state of the robot may be acquired with the control unit by the intermediate of sensors, for example position sensors and force sensors.

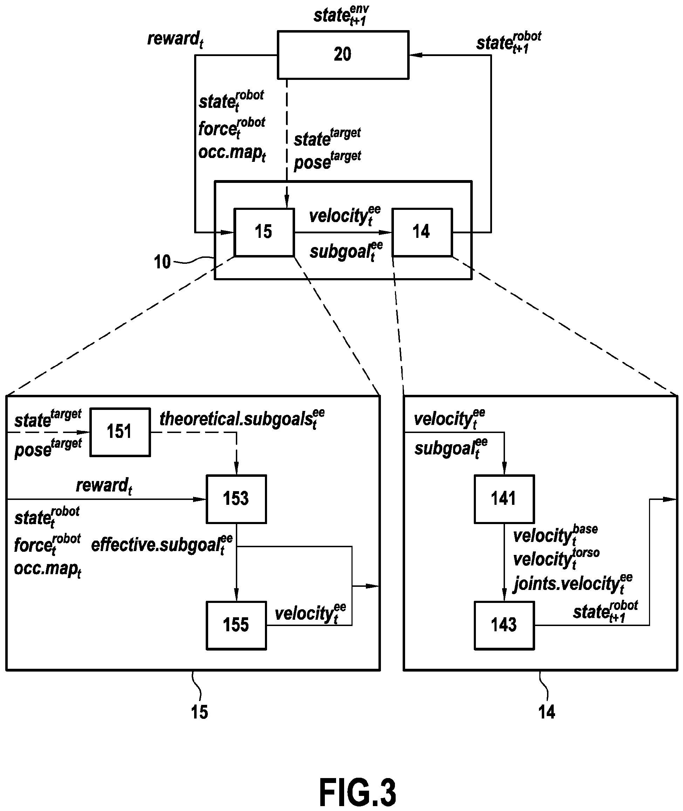

Figure 3 illustrates an exemplary architecture of a robotic mobile manipulation method according to the present disclosure. The architecture relates to a simulation-based training method to train an end-effector control model to find end-effector motion adapted to various tasks. Once the control model is trained, the model can be deployed into one or more physical (or virtual) robots in order to control robots for performing input tasks. In order to complete the input task, the robot may be required to interact with one or more objects, including articulated objects.

In the architecture of Fig. 3, a control model of a robot 10 interacts with an environment 20 and calculates motions to perform a manipulation task.

In embodiments, the current state of the robot, $state_t^{robot}$ and an occupancy map, *occ. map_t,* are fed to the control model (14, 15) of the robot. Further, properties of a target comprising a state of the target, *state^target* and a pose of the target, *pose^target* are fed to the control model (14, 15). Based on such inputs, the control model (14, 15) of the robot simulates motion of the robot so that the robot achieves a new state, $state_{t+1}^{robot}$, that makes the robot progress toward the input task represented by the target pose. Interaction of the new state of the robot with the environment state, $state_{t+1}^{env}$, is simulated and a reward, *reward_t,* is calculated to update the control model of the end-effector 15. The occupancy map may be, for instance, obtained from sensors attached to the robot.

The state of the target and the pose of the target are fed only once to the end-effector control model in order to initialize the task to be performed by the robot and generate the theoretical sub-goals. Conversely, the state of the robot, the force feedback of the robot and the occupancy map of the environment are updated and fed to the robot at each iteration. To reflect these differences, the dotted arrows indicate flow of information that only occurs during the training of the robot control model. The plain arrows indicate flow of information that occurs both during training and during inference.

The map, *occ. map_t,* may be a local occupancy map of the surroundings of the robot. In particular, in embodiments, the end-effector control model receives robot-centered map with a side of a few meters. The map is then processed by a map encoder before being concatenated with the state of the robot and the target pose and target state.

Properties of the robot may also be input in the control model, such as a force feedback parameter, $force_t^{robot}$, representative of a force exerted on the end-effector, for example by an element of the environment.

With reference to Fig. 3, the control model of the robot comprises an end-effector control model (under training) 15 and a pre-trained base control model 14. The end-effector control model comprises a path generator 151 which calculates theoretical sub-goals, *theoretical.* $subgoals_t^{ee}$, (intermediate poses) configured to achieve the input manipulation task characterized by the properties of the target. The path generator receives the state of the target representative of the completion of a task. The state of the target may also comprise other parameters, for example an openness parameter representative of the fact that the object is an open articulated object or is a closed articulated object.

The path generator 151 may be a path searching algorithm such as an A* algorithm.

Based on the theoretical sub-goals, on the reward obtained from the previous interaction between the robot and the environment, and on the inputs from the previous states of the robots and the environment ( $state_t^{robot}, force_t^{robot}$, *occ. map_t),* a reinforcement learning-based sub-goal generator (SBG) model 153 calculates the next optimal subgoal, *effective.* $subgoal_t^{ee}$, that is close to one of the theoretical sub-goals while satisfying constraints from the environment and the robot. The sub-goals provide guidance to facilitate the generation of a path by the end-effector control model under training. Therefore, the model 153 acts as a path optimizer taking into accounts environment constraints. The model 153 aims to maximize expected reward while exploring as much as possible the environment (which corresponds to maximizing entropy). The model 153 may be based on a soft actor critic model that aims at quantifying the quality of action and helping decision for next iteration steps. In particular, the model 153 may combine off-policy updates with stable stochastic actor-critic form.

The effective subgoal generated by the SAC model 153 is subsequently processed by a linear interpolation planner 155 in order to calculate end-effector commands, $velocity_t^{ee}$, for moving the end-effector closer to the next-subgoal at the next motion of the robot. The linear interpolation is used to find intermediate end-effector positions that are on the path to the effective subgoal.

The end-effector commands and the effective sub-goal calculated by the end-effector control model 15 are passed to the base control model 14 in order to produce motion of the robots characterizing the new state of the robot, $state_{t+1}^{robot}$.

In particular, with reference to the detailed view of the base control model 14 in Fig.3, the end-effector commands, $velocity_t^{ee}$, and the effective sub-goal, *effective.* $subgoal_t^{ee}$, are fed to a pre-trained base SAC model 141 in order to calculate velocity vectors of elements of the robot suitable for moving the robot to the next intermediate end-effector position while satisfying dynamical constraints of the robot. The velocity vectors may comprise the velocity of the base, $velocity_t^{base}$. Optionally, the base SAC model 143 may also generate a lift velocity, $velocity_t^{torso}$, configured to lift a torso of the robot and/or joints velocity, *joints.* $velocity_t^{ee}$, configured to move one or more joints of the robot.

In embodiments, the base SAC model 14 is pre-trained for finding base motions that are in agreement with any end-effector motions. The pre-training may be implemented for example, using the reinforcement learning method disclosed in [REF 1]. In particular, the end-effector commands, $velocity_t^{ee}$, is used as a starting point for the trained base SAC model 14.

The velocity vectors are subsequently sent to an inverse kinematics solver 143 in order to calculate the entire kinematics parameters of the robot required to implement the motion corresponding to the calculated velocity vectors. Such kinematics parameters characterize the new state of the robot, $state_{t+1}^{robot}$. The state of the robot is updated at each iteration of the loop of the architecture illustrated in Fig. 3.

The end-effector control model 15 is updated iteratively through a reinforcement learning scheme following the architecture in Fig. 3. The iteration refreshment is characterized by a frequency that can be, for example, of approximately 200 Hz.

At each iteration, the end-effector control model 15 is updated based on a reward, *reward_t,* that is derived from various parameters related to the motions of the base 14 and the end-effector 15. In particular, the reward is a function of a list of weighted parameters comprising: a feasibility parameter of the base model to perform a motion of the robot (related to the kinematic feasibility of the motions of the base and end-effector), a progress parameters related to the progress of the end-effector towards the pose of the next effective sub-goal, a success parameter related to the achievement of an effective sub-goal, and an openness parameter related to the fact the target object is in the right or wrong openness state with respect to the input task.

The base control model 132 may be trained, for example, using the method disclosed in [REF 1].

Based on the outputs of the base control model 131, an inverse kinematics solver is used to solve the remaining end-effector joints and, together with the environment returns the reward, *reward_t.* The structure of the model may be for example similar to what is disclosed in [REF 1].

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method for training a robot control model to perform manipulation tasks comprising:

   - (S10) determining a theoretical end-effector path between a current pose of an end-effector of a robot representative of a current state of the robot and a final pose representative of completion of a manipulation task;
   - (S20) generating an effective end-effector path by using a machine learning-based end-effector control model considering the theoretical end-effector path as a target while satisfying dynamic constraints caused by an environment of the robot in relation to the current state of the robot;
   - (S30) calculating end-effector commands and base commands for moving the end-effector according to the effective end-effector path;
   - (S40) updating the state of the robot by implementing motion of the end-effector and the base of the robot within the environment using the calculated end-effector commands and base commands; and
   - (S50) updating the end-effector control model through a reinforcement learning using a reward taking into account interaction between the environment of the robot and the updated state of the robot.

2. The method according to claim 1, wherein the theoretical end-effector path comprises a plurality of theoretical subgoals, and the end-effector control model is configured to generate an effective end-effector path that comprises at least one effective sub-goal that is reachable by the end-effector based on the constraints of the robot and the environment.

3. The method of claim 1 or 2, wherein the theoretical end-effector path is recalculated when the effective end-effector path is obstructed or if the target pose is changed to a new target pose.

**4.** The method according to claim any of claims 1 to 3, wherein (S30) calculating end-effector commands and base commands for moving the end-effector according to the effective end-effector path comprises:

- calculating velocity parameters of the end-effector required to achieve motion of the end-effector according to the end-effector path.

**5.** The method according to any of claims 1 to 4, wherein (S30) calculating base commands and end-effector commands for moving the base according to the effective end-effector path and the end-effector commands using a pre-trained base control model comprises:

- calculating velocity parameters of the base of the robot required to achieve motion of the end-effector according to the effective end-effector path, where the calculation comprises using a pre-trained base control model configured to control the base so that the end-effector motion is possible.

**6.** The method according to any of claims 1 to 5, wherein (S40) updating the state of the robot by implementing motion of the end-effector and the base of the robot using the calculated end-effector commands and base commands comprises:

- processing the base commands and end-effector command with an inverse kinematics solver to obtain commands corresponding to the updated state of the robot in a joint coordinate system.

**7.** The method of any of claims 1 to 6, wherein the state of the robot comprises a force feedback of the robot representative of forces acting on the end-effector.

**8.** The method according to any of claims 1 to 7, wherein a target state of an object representative of completion of a manipulation task is used as an input in the step of (S10) determining a theoretical end-effector path between a current pose of an end-effector of the robot representative of a current state of the robot and a target pose representative of completion of the manipulation task.

**9.** The method according to any of claims 1 to 8, wherein the reward is a function of a progress of the end-effector towards the effective sub-goal.

**10.** The method according to any of claims 1 to 9, wherein the target state comprises a parameter representative of the fact that an articulated object to manipulate is in an open configuration or in a closed configuration.

**11.** A method for controlling a robot to perform a manipulation task comprising:

- training a control model of a robot to calculate motions of the robot configured to implement manipulation tasks using the training method of any of claims 1 to 10;
- controlling motion of a robot in order to perform a predetermined manipulation task using the trained control model.

**12.** The method of claim 11, wherein the training is simulation-based and the control model of the robot is fixed after training; the fixed control model being directly used for inference in order to control the robot in a new environment without domain adaptation.

**13.** A mobile manipulation robot comprising:

- a base (110) configured to allow motion of the robot within an environment;
- an end-effector (120) configured to interact with objects in the environment of the robot; and
- a control unit (130) configured to command a motion of the base (110) and a motion of the end-effector (120) in order to perform a predetermined manipulation task involving interaction with objects of the environment using the method according to any of claims 11 to 12.

**14.** A computer program including instructions for executing the steps of the method according to any of claims 1 to 12 when said program is executed by a computer.

**15.** A recording medium readable by a computer and having recorded thereon a computer program including instructions for executing the steps of the method according to any of claims 1 to 12.

**Amended claims in accordance with Rule 137(2) EPC.**

**1.** A computer-implemented method for training a robot control model to perform manipulation tasks comprising:

- (S10) determining a theoretical end-effector path between a current pose of one or more end-effectors of a robot representative of a current state of the robot and a final pose representative of completion of a manipulation task, wherein the theoretical end-effector path comprises a plurality of theoretical subgoals configured to achieve the manipulation task **characterized by** properties of the one or more end-effectors;

- (S20) generating an effective end-effector path by using a machine learning-based end-effector control model considering the theoretical end-effector path as a target while satisfying dynamic constraints caused by an environment of the robot in relation to the current state of the robot, wherein the end-effector control model is configured to generate an effective end-effector path that comprises at least one effective sub-goal that is reachable by the end-effector based on the constraints of the robot and the environment from the theoretical end-effector path;

- (S30) calculating end-effector commands and base commands for moving a pose of the one or more end-effectors according to the effective end-effector path by using a pre-trained base control model;

- (S40) updating the state of the robot by implementing motion of the one or more end-effectors and the base of the robot within the environment using the calculated end-effector commands and base commands; and

- (S50) updating the end-effector control model through a reinforcement learning using a reward taking into account interaction between the environment of the robot and the updated state of the robot.

2. The method of claim 1, wherein the theoretical end-effector path is recalculated when the effective end-effector path is obstructed or if the target pose is changed to a new target pose.

3. The method according to claim 1 or 2, wherein (S30) calculating end-effector commands and base commands for moving the end-effector according to the effective end-effector path comprises:

- calculating velocity parameters of the end-effector required to achieve motion of the end-effector according to the end-effector path.

4. The method according to any of claims 1 to 3, wherein (S30) calculating base commands and end-effector commands for moving the base according to the effective end-effector path and the end-effector commands using a pre-trained base control model comprises:

- calculating velocity parameters of the base of the robot required to achieve motion of the end-effector according to the effective end-effector path, where the calculation comprises using a pre-trained base control model configured to control the base so that the end-effector motion is possible.

5. The method according to any of claims 1 to 4, wherein (S40) updating the state of the robot by implementing motion of the end-effector and the base of the robot using the calculated end-effector commands and base commands comprises:

- processing the base commands and end-effector command with an inverse kinematics solver to obtain commands corresponding to the updated state of the robot in a joint coordinate system.

6. The method of any of claims 1 to 5, wherein the state of the robot comprises a force feedback of the robot representative of forces acting on the end-effector.

7. The method according to any of claims 1 to 6, wherein a target state of an object representative of completion of a manipulation task is used as an input in the step of (S10) determining a theoretical end-effector path between a current pose of an end-effector of the robot representative of a current state of the robot and a target pose representative of completion of the manipulation task.

8. The method according to any of claims 1 to 7, wherein the reward is a function of a progress of the end-effector towards the effective sub-goal.

9. The method according to claim 7, wherein the target state comprises a parameter representative of the fact that an articulated object to manipulate is in an open configuration or in a closed configuration.

10. A method for controlling a robot to perform a manipulation task comprising:

- training a control model of a robot to calculate motions of the robot configured to implement manipulation tasks using the training method of any of claims 1 to 9;

- controlling motion of a robot in order to perform a predetermined manipulation task using the trained control model.

11. The method of claim 10, wherein the training is simulation-based and the control model of the robot is fixed after training; the fixed control model being directly used for inference in order to control the robot in a new environment without domain adaptation.

12. A mobile manipulation robot comprising:

- a base (110) configured to allow motion of the robot within an environment;

- an end-effector (120) configured to interact with objects in the environment of the robot; and
- a control unit (130) configured to command a motion of the base (110) and a motion of the end-effector (120) in order to perform a predetermined manipulation task involving interaction with objects of the environment using the method according to any of claims 10 to 11.

13. A computer program including instructions for executing the steps of the method according to any of claims 1 to 11 when said program is executed by a computer.

14. A recording medium readable by a computer and having recorded thereon a computer program including instructions for executing the steps of the method according to any of claims 1 to 12.

S10 — Determining a theoretical end-effector path between a current pose representative of a current state of the robot and a final pose representative of the completion of an input object manipulation task

S20 — Generating an effective end-effector path by using a machine learning-based end-effector control model considering the theoretical end-effector path as a target while satisfying dynamic constraints caused by an environment of the robot

S30 — Calculating end-effector commands and base commands for moving the end-effector according to the effective end-effector path

S40 — Updating the state of the robot by implementing motion of the end-effector and the base of the robot within the environment

S50 — Updating the end-effector control model using reinforcement learning based on a reward taking into account interaction between the environment of the robot and the updated state of the robot

# FIG.1

FIG.2

$state_{t+1}^{env}$

$reward_t$

**20**

$state_{t+1}^{robot}$

$state_t^{robot}$
$force_t^{robot}$
$occ.map_t$

$state^{target}$
$pose^{target}$

**15** $\quad velocity_t^{ee} \quad$ **14**

$subgoal_t^{ee}$

**10**

$state^{target}$ **151** $theoretical.subgoals_t^{ee}$

$pose^{target}$

$reward_t$

$state_t^{robot}$

$force_t^{robot}$ **153**

$occ.map_t$ $effective.subgoal_t^{ee}$

**155** $velocity_t^{ee}$

**15**

$velocity_t^{ee}$

$subgoal_t^{ee}$

**141**

$velocity_t^{base}$
$velocity_t^{torso}$
$joints.velocity_t^{ee}$

**143** $state_{t+1}^{robot}$

**14**

# FIG.3

Europäisches
Patentamt

European
Patent Office

Office européen
des brevets

## EUROPEAN SEARCH REPORT

**Application Number**

EP 24 30 5118

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FEI XIA ET AL: "ReLMoGen: Leveraging Motion Generation in Reinforcement Learning for Mobile Manipulation", ARXIV.ORG, CORNELL UNIVERSITY LIBRARY, 201 OLIN LIBRARY CORNELL UNIVERSITY ITHACA, NY 14853, 26 March 2021 (2021-03-26), XP081899120, * abstract * * figures 1-3, A1-A4 * * column 3, line 16 - line 24 * * column 4, line 50 - column 7, line 25 * * column 8 * * Appendix, section A. Tasks * * Appendix, section E. b) * ----- | 1-15 | INV. B25J9/16 |

**TECHNICAL FIELDS SEARCHED (IPC)**

B25J
G05B

The present search report has been drawn up for all claims

| Place of search | Date of completion of the search | Examiner |
|---|---|---|
| The Hague | 12 June 2024 | Lorenzo Barreiro, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HONERKAMP, DANIEL** ; **WELSCHEHOLD, TIM** ; **VALADA, ABHINAV**. N2M2: Learning Navigation for Arbitrary Mobile Manipulation Motions in Unseen and Dynamic Environments. *IEEE Transactions on Robotics*, 2023
- **HONERKAMP, DANIEL** ; **WELSCHEHOLD, TIM** ; **VALADA, ABHINAV**. Learning kinematic feasibility for mobile manipulation through deep reinforcement learning. *IEEE Robotics and Automation Letters*, 2021, vol. 6 (4), 6289-6296

- **SCHMALSTIEG, FABIAN** ; **HONERKAMP, DANIEL** ; **WELSCHEHOLD, TIM et al.** Learning Hierarchical Interactive Multi-Object Search for Mobile Manipulation. *IEEE Robotics and Automation Letters*, 2023